**Europäisches Patentamt**

(19) **European Patent Office**

**Office européen des brevets**

(11) Publication number: **0 010 290**
**B1**

(12) # EUROPEAN PATENT SPECIFICATION

(45) Date of publication of patent specification: **27.04.83**

(51) Int. Cl.³: **B 22 F 5/00, B 22 F 3/14, B 23 P 15/32**

(21) Application number: **79103989.4**

(22) Date of filing: **16.10.79**

(54) **A press for forming particulate tungsten carbide into a blank for cutting tool bit insert and a sinter fixture for compensating shrinkage distortion during sintering.**

(30) Priority: **20.10.78 AU 6483/78**

(43) Date of publication of application:
**30.04.80 Bulletin 80/9**

(45) Publication of the grant of the patent:
**27.04.83 Bulletin 83/17**

(84) Designated Contracting States:
**CH FR GB IT SE**

(56) References cited:
**DE - A - 2 032 378**
**FR - A - 1 193 090**
**FR - A - 1 526 032**
**US - A - 1 749 981**

The file contains technical information
submitted after the application was filed and not
included in this specification

(73) Proprietor: **AUSTUNG PROPRIETARY LIMITED**
**44 Caroline Street**
**South Yarra Victoria 3141 (AU)**

(72) Inventor: **Springborn Karl Siegfried**
**Lot 133, Jell's Road**
**Wheeler's Hill Victoria, 3170 (AU)**

(74) Representative: **Andrejewski, Walter et al,**
**Theaterplatz 3 Postfach 100254**
**D-4300 Essen 1 (DE)**

Courier Press, Leamington Spa, England

# A press for forming particulate, tungsten carbide into a blank for a cutting tool bit insert
## and a sinter fixture for compensating shrinkage distortion during sintering

The invention relates to a press with contra-rotating jaws and forming cavity closure members for cold pressure-forming of particulate, tungsten carbine into helically-shaped blanks for fitting to a cutting tool bit as inserts; a separate sinter piece has components of similar configuration and function to those of the press and has means built in for continually maintaining correct angular and radial dimensions of the pressed insert blank to compensate for shrinkage and prevent distortion during sintering.

Sintered tungsten carbide cutting tool bit insert blanks used as cutting edges fixed to high-speed cutting tools such as augers with helical cutting edges are made by pressing tungsten carbide, sometimes mixed with cobalt, under pressure into slabs or ingots from which special shapes are then cut or pressed directly into blanks of desired shape or size. Blanks are then semi-sintered in a non-oxidizing atmosphere at temperatures below 800°C (1472°F) and further formed by machining. Final sintering is then carried out but the sintered carbide so obtained is so hard that the sintered shape can only be corrected by diamond cutter grinding. Uncontrolled shrinkage of the carbide blanks occurs with distortion of shape in existing methods in which carbide powder is brushed onto a spiral or helical cutting tool edge and the carbide is partially sintered on the tool. This requires reheating and bending the tool. Again a strip of pre-sintered or partially sintered carbide is placed along or beside the spiral cutting contour of the cutting tool and fused onto the tool by sintering at a higher temperature than the first-stage temperature. Uncontrolled shrinkage and distortion of the pressed blank occurs during existing sintering processes.

This causes irregularities in the sintered insert and loss of edge and shoulder sharpness or definition.

The invention as claimed is intended to remedy the above problem of shrinkage distortion of a sintered blank by controlling or confining those surfaces and edges which are critically affected during shrinkage caused by sintering and namely the whole diameter or radial height and the angular thickness or the thickness of the insert blank in the pitch circle direction of the insert when it is in mounted position on a spiral cutting bit. The whole diameter of the insert is that distance between the root diameter or base of the insert on the cutter bit face and the radial distance from the base to the top of the insert or the outer diameter of the cutter.

The advantages of the invention are mainly that the correct configuration of a spiral insert blank is obtained by press forming and then maintained during sintering and shrinking of the blank by a sinter piece having distortion-correcting design features built in which continually correct or maintain correct configuration of an insert blank of tungsten carbide during sintering.

One way of carrying out the invention is described in detail below with reference to drawings which illustrate several specific embodiments, in which:—

Figure 1 is a perspective view of a forming press in accordance with the invention with a top pressure member removed, and side cavity sealing plate loosened.

Figure 2 is a plan view of the press with side cavity-sealing plate closed up.

Figure 3 is a vertical section taken along line A—A of figure 2.

Figure 4 is a partially exploded view of the shrinkage-compensating, sintering fixture for pressed and formed cutter bit insert blanks for cutting tools.

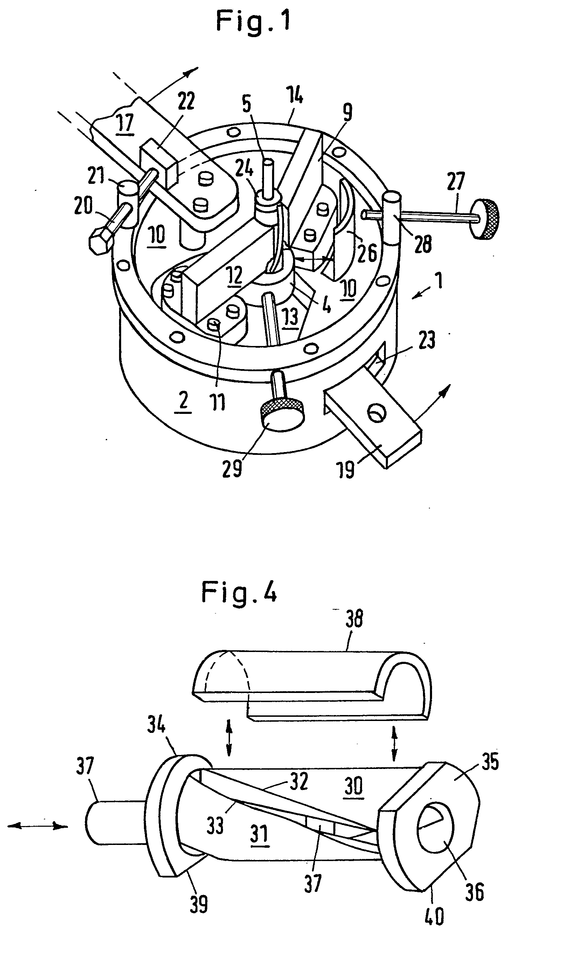

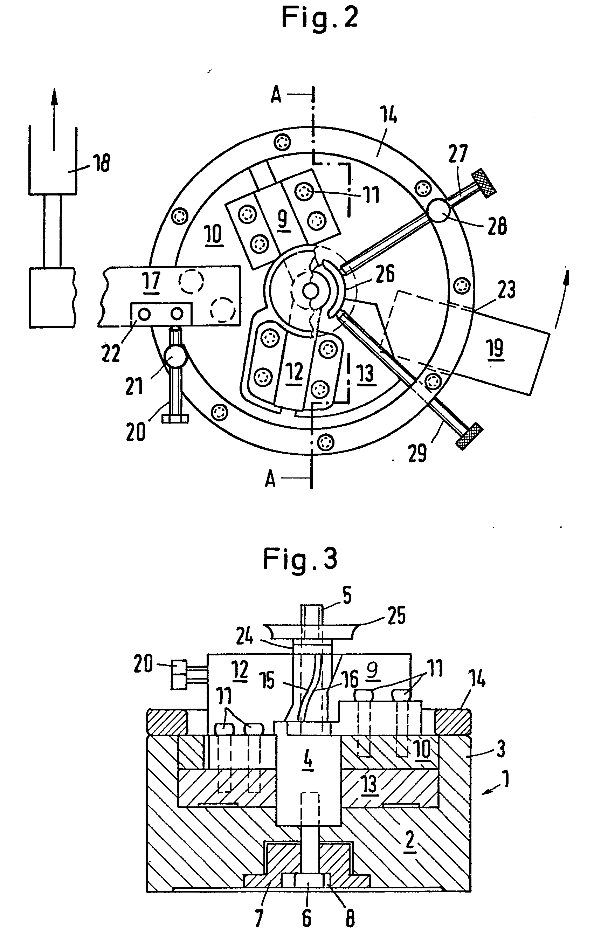

The figures 1 to 3 show a cold-forming press for making pre-sinter blanks of tungsten carbide for tool cutter bit inserts or tips for milling machine cutters, augers and other such devices and which comprises a bowl shaped body 1 with a recessed base 2, a side wall 3 and a central column 4 supporting a centre forming pin 5. The column 4 is bolted to the base of the body by a socket screw 6 the head of which clamps a securing collar 7 into the recess 8 under the body. There is mounted around the centre pin 5 a compression jaw 9 the base of which is fixed on a compression plate 10 by socket screws 11. An ejection jaw 12 is similarly fixed to an ejection plate 13 beneath the compression plate, both plates 10, 13 being designed for limited, angular reciprocating movement about the column 4 and centre pin 5. The plates 10, 13 are retained within the body by the plate-retaining collar 14. The jaws 9, 12 are formed as two matching split segments of a cylindrically curved sleeve split into two segments along blank-shaped cuts which are matching helical or spiral separation cut or cuts forming a helical or spiral forming cavity on one side of the centre pin 5 and an identical jaw-separation slot on the diametrically opposite side of the pin 5. By an angular movement of the compression jaw 9 or of the ejection jaw 12 the complementary, helically-shaped mating surfaces 15 and 16 of the split-shell segments, i.e. the circumferentially facing areas of the forming cavity move towards each other whereas at the same time the two helical surfaces of the jaw-separation slot on the opposite side of the pin 5 move away from each other, and vice versa. To compress a charge by applying sufficient pressure of the order of 100 pounds, a closing and opening movement of the compression jaw 9 and compression plate 10 is caused by a reciprocating angular movement of the compression lever 17 which is powered by suitable means such as a pneumatic ram 18. The movement of the ejection jaw 12 and ejection plate 13 facilitating removal and causing ejection of the compressed blank is effected by the ejection lever 19 actuated by a pneumatic ram. The extent of angular travel of the compression lever 17, plate 10 and jaw 9 is limited by the limit stop screw 20 mounted on the threaded post 21 and the screw is adapted to bear against the stop block 22. The extent of the angular travel of the ejection lever 19, plate 13 and jaw 12 is limited by the confining edges of the angular slot 23. The forming cavity is sealed against loss of particulate carbide charge material by means of the separate top cavity sealing collar 24 sealed under pressure by vertically reciprocating means 25, the separate cavity side sealing plate 26 clamped in place by upper threaded press bolt 27 mounted on the post 28 and the lower threaded press bolt 29 mounted through the plate-retaining ring 14.

Referring to figure 4, there is shown a sintering fixture for sintering press-formed, helically-shaped, tungsten carbide cutting tool bit inserts which although is a separate assembly from the press assembly nevertheless has components of the same shape and function and comprises four components of graphite in the form of a spool-shaped body on a centre pin and which is longitudinally split into two sleeve-like segments along helical separation cuts 32 and 33 which divide the segments 30 and 31. The segments 30 and 31 have flanged partially circular ends 34 and 35 and a longitudinal or axial bore 36 which is adapted to receive a removable, rod-like pin 37. The round surface of the pin is, when the pin is inserted into the bore, adapted to maintain contact with the bottom surface of a pressed blank and the helical edge walls defining the two sleeve segments are adapted to maintain contact of the sides of a pressed blank. A cover piece 38 of complementary curvature to the spool or sleeve segments is adapted to bear against the top edge of a pressed blank. The flanged ends each have a flattened portion 39 and 40, respectively. When the assembled fixture containing a pressed blank is placed upon the flat surface in a sinter furnace, the flattened rim portions 39 and 40, which are each off-set with respect to each other in an angular direction about the longitudinal axis of the sintering fixture, produce a torque or twisting action of each segment of the shell towards each other so that the edge surfaces 32 and 33 close up or bear against a helical blank to counteract angular shrinkage distortion in the direction of the pitch circle of the sintered blank insert installed on or against the cutting edge profile of a cutting tool bit when the blank is sintered at 1500° to 1600°C, depending on the composition of the sinter mix.

## Claims

1. Press for cold forming a charge of particulate tungsten carbide into a sinter blank for cutting tool insert bit, characterised by a bowl-shaped body (1) with a cylindrical centre pin (5), a compression jaw (9) fixed to a compression plate (10) horizontally reciprocatable through a limited arc about the centre pin (5) by a compression lever arm (17), a pressed blank ejection jaw (12) fixed on a horizontally reciprocatable ejection plate (13) moved through a limited arc about the centre pin (5) by an ejection lever (19) in contra-reciprocation to the compression plate (10), the jaws (9, 12) being formed as two matching split segments of a cylindrical sleeve mating along surfaces of separation cuts defining helical blank-forming surfaces (15 and 16), one of the cuts on the sleeve segment at one side of the centre pin (5) defining a forming die for the side walls of a blank by forming compression surfaces (15, 16), the other cut defining a jaw separation slot on the diametrically opposite side of the centre pin (5) to the compression surfaces (15, 16), the die charging cavity being formed collectively by the cylindrically curved surface of the centre pin (5), by the flat top surface of a column (4) at the base of the centre pin (5), by the compression surfaces (15, 16) of the split segment sleeves, by a curved side-sealing plate (26) with a helically curved sealing surface, and by the flat undersurface of a vertically reciprocatable sealing collar (24) which is closed after the charge has been introduced into the die cavity, separate clamping means (27 and 29) being provided for the side-sealing plate (26) and clamping or pressure application means being provided for the sealing collar (24) which seals the top of the die forming cavity.

2. A sinter fixture for counteracting shrinkage shape distortion during sintering of shaped cutting tool bit insert blanks cold pressed from particulate, tungsten carbide in the press claimed in claim 1, characterised in that it is constructed as a generally spool-shaped, hollow shell with a central cylindrical section (30, 31) and flanged ends (34 and 35), the central cylindrical section being split into two equal segments (30 and 31) by longitudinal, helical separation cuts (32 and 33) which form mating edges, the segments (30 and 31) forming a cylindrical shaped bore (36) a removable centre pin (37) being removably located in the bore, a separate curved cover (38) being provided to fit over the cylindrical section of each shell segment (30, 31) when assembled on the centre pin (37) and in contact with the top or outer surface of a pressed blank to press the blank against the centre pin (37), each flanged end (34, 35) of the shell segments (30, 31) having a flattened rim portion (39 and 40) mutually off-set about the longitudinal axis of the shell such that when the fixture is assembled with the centre pin (37) inserted in the bore (36) of the shell segments (30, 31), and a pressed blank placed in the gap between the helical separation cuts (32, 33) and against the centre pin (37) and cover 38 and the sinter fixture is placed on the flat surface of a sinter furnace or on the flat surface of a carrier member in a sinter furnace, the surfaces along the edge of the separation cuts (32, 33) are constrained to bear against the side walls of the blank by a torque produced by gravitational reaction of the mutually off-set flattened rim portions (39, 40) on the flat surface of the sinter furnace or carrier.

3. A sinter fixture as claimed in claim 2, characterised in that all the components are constructed of graphite.

**Patentansprüche**

1. Presse zum Kaltumformen einer aus pulverförmigem Wolframkarbid bestehenden Beschickung in einen Sinterpreßling für ein Schneidwerkzeugbestückungsteil, gekennzeichnet durch einen napfförmigen Körper (1) mit zylindrischem Mittelzapfen (15), eine Druckbacke (9), welche an einer mit Hilfe eines Druckhebelarmes (17) auf einem begrenzten Bogen um den Mittelzapfen (5) horizontal hin- und herbewegbaren Druckplatte (10) befestigt ist, und eine Preßlingauswerferbacke (12), welche an einer horizontal hin- und herbewegbaren, mit Hilfe eines Auswerferhebels (19) auf einem begrenzten Bogen in einer zur Druckplatte (10) gegenläufigen Hin- und Herbewegung um den Mittelzapfen (5) bewegten Auswerferplatte (13) befestigt ist, wobei die Backen (9, 12) als zwei zueinander passende Spaltsegmente einer zylindrischen Hülse ausgebildet sind, welche längs schraubenlinienförmige Preßlingsformflächen (15 und 16) bildender Oberflächen von Trennschnitten aneinander angepaßt sind, von denen der eine am Hülsensegment auf einer Seite des Mittelzapfens (5) durch Bildung von Druckflächen (15, 16) ein Formwerkzeug für die Seitenwandungen eines Preßlings und der andere auf der den Druckflächen (15, 16) gegenüberliegenden Seite des Mittelzapfens (5) einen Backentrennschlitz darstellt, wobei der zu beschickende Werkzeughohlraum insgesamt von der zylindrisch gekrümmten Fläche des Mittelzapfens (5), der ebenen Oberseite einer am Fuß des Mittelzapfens (5) vorgesehenen Säule (4), den Druckflächen (15, 16) der Spaltsegmenthülsen, einer gekrümmten Seitendichtplatte (26) mit schraubenlinienförmig gekrümmter Dichtfläche und der ebenen Unterseite eines vertikal hin- und herverstellbaren, nach Einbringen der Beschickung in den Werkzeughohlraum in Schließstellung bewegten Dichtkragens (24) gebildet ist und wobei für die Seitendichtplatte (26) getrennte Klemmmittel (27 und 29) und für den Werkzeughohlraum nach oben hin abdichtenden Dichtkragen (24) Klemm- oder Druckbeaufschlagungsmittel vorgesehen sind.

2. Sinterhalter zum Entgegenwirken einer Schwindungsverformung beim Sintern von aus pulverförmigem Wolframkarbid in der Presse nach Anspruch 1 gepreßten Preßlingen für Schneidwerkzeugbestückungsteile, dadurch gekennzeichnet, daß er als ein im allgemeinen spulenförmiges hohles Rundgehäuse mit einem mittleren zylindrischen Abschnitt (30, 31) und Flanschenden (34 und 35) aufgebaut ist, daß der mittlere zylindrische Abschnitt durch Passungsränder bildende schraubenlinienförmige Längstrennschnitte (32 und 33) in zwei gleiche Segmente (30 und 31) aufgeteilt ist, welche eine zylindrisch gestaltete Längsbohrung (36), in der ein Zentraldorn (37) entfernbar angeordnet ist, bilden, daß eine getrennte gekrümmte Abdeckung (38) vorgesehen ist, welche auf den zylindrischen Abschnitt jedes Rundgehäusesegmentes (30, 31) nach Zusammenbau auf dem Zentraldorn (37) und in Berührung mit der Ober- oder Außenfläche eines Preßlings zum Anpressen desselben an den Zentraldorn (37) aufsetzbar ist, und daß jedes Flanschende (34, 35) der Rundgehäusesegmente (30, 31) einen abgeflachten Randabschnitt (39 und 40) aufweist, die gegenseitig um die Längsachse des Rundgehäuses derart versetzt sind, daß dann, wenn der Halter unter Einführen des Zentraldornes (37) in die Längsbohrung (36) der Rundgehäusesegmente (30, 31) zusammengebaut, der Preßling in den Spalt zwischen den schraubenlinienförmigen Trennschnitten (32, 33) und gegen den Zentraldorn (37) sowie die Abdeckung (38) gesetzt und der Sinterhalter auf die ebene Oberfläche eines Sinterofens oder auf die ebene Oberfläche eines Trägerelementes in einem Sinterofen gelegt worden ist, die Oberflächen längs des Randes der Trennschnitte (32, 33) durch ein mit Hilfe einer Gravitationsreaktion der gegenseitig versetzten abgeflachten Randabschnitte (39, 40) auf die ebene Oberfläche des Sinterofens oder Trägers ausgeübtes Drehmoment zu einem Druck gegen die Seitenwandungen des Preßlings gezwungen sind.

3. Sinterhalter nach Anspruch 2, dadurch gekennzeichnet, daß alle seine Bauteile aus Graphit hergestellt sind.

**Revendications**

1. Presse pour le façonnage à froid d'une charge de carbure de tungstène en particules en une ébauche frittée de pièce rapportée de mèche d'outil de coupe, caractérisée en ce qu'elle comprend un corps en forme de cuvette (1), avec une broche centrale cylindrique (5), une mâchoire de compression (9) fixée à une plaque de compression (10) pouvant effectuer un mouvement horizontal de va-et-vient sur un arc limité autour de la broche centrale (5) sous l'action d'un levier de compression (17), une mâchoire d'éjection d'ébauche pressée (12) fixée sur une plaque d'éjection (13) animée d'un mouvement horizontal de va-et-vient sur un arc limité autour de la broche centrale (5) par un levier d'éjection (19) dans une direction opposée à celle de la plaque de compression (10), les mâchoires (9, 12) étant constituées de deux segments séparés correspondants d'un manchon cylindrique appariés le long des surfaces de découpes de séparation définissant des surfaces de façonnage d'ébauches hélicoïdales (15 et 16), une des découpes du segment de manchon situé d'un côté de la broche centrale (5) définissant une matrice de formage pour les parois latérales d'une ébauche en définissant des surfaces de compression (15, 16), tandis que l'autre découpe définit une rainure de séparation des mâchoires sur le côté de la broche centrale (5) qui est diamétralement opposé aux surfaces de compression (15, 16), la cavité de chargement de matrice étant formé conjointement par la surface à courbure cylindrique de la broche centrale (5), par la surface supérieure plane d'une colonne (4) à la base de la broche centrale (5), par les surfaces de compression (15, 16) des manchons en deux segments séparés, par une plaque courbe d'étanchéité latérale (26) comportant une surface d'étanchéité à courbure hélicoïdale, ainsi que par la surface inférieure plane d'un collier d'étanchéité à mouvement vertical de va-et-vient (24) qui est fermé après introduction de la charge dans la cavité de matrice, des éléments de serrage séparés (27 et 29) étant prévus pour la plaque d'étanchéité latérale (26), tandis qu'un élément de serrage ou d'application de pression est prévu pour le collier (24) qui étanchéifie le sommet de la cavité de formage de la matrice.

2. Support de frittage destiné à contrecarrer la déformation due au retrait lors du frittage d'ébauches de pièces rapportées de mèches d'outils de coupe profilées pressées à froid à partir de carbure de tungstène en particules dans la presse suivant la revendication 1, caractérisé en ce qu'il est constitué d'une coquille creuse généralement en forme de bobine avec une section cylindrique centrale (30, 31) et des extrémités à rebords (34 et 35), la section cylindrique centrale étant divisée en deux segments égaux (30 et 31) par des découpes de séparation longitudinales hélicoïdales (32 et 33) qui forment des bords d'appariement, les segments (30 et 31) définissant un alésage cylindrique (36) une broche centrale amovible (37) étant disposée de façon amovible dans l'alésage, un couvercle courbe séparé (38) étant prévu pour s'adapter pardessus la section cylindrique de chaque segment de coquille (30, 31) lors de l'assemblage sur la broche centrale (37), tout en entrant en contact avec le dessus ou la surface extérieure d'une ébauche pressée afin de presser cette dernière contre la broche centrale (37), chaque extrémité à rebord (34, 35) des segments de coquille (30, 31) comportant un rebord aplati (39 et 40) mutuellement décalé autour de l'axe longitudinal de la coquille de sorte que lorsque le support de frittage est assemblé avec la broche centrale (37) introduite dans l'alésage (36) des segments de coquille (30, 31), et une ébauche pressée étant placée dans l'espace vide compris entre les découpes de séparation hélicoïdales (32, 33) et contre la broche centrale (37) et le couvercle (38) et le support de frittage est placé sur la surface plane d'un four de frittage ou sur la surface plane d'un organe support prévu dans ce dernier, les surfaces s'étendant le long du bord des découpes de séparation (32, 33) sont contraintes de venir appuyer contre les parois latérales de l'ébauche par un couple engendré par une réaction de gravitation des rebords aplatis mutuellement décalés (39, 40) sur la surface plane du four de frittage ou de l'organe support de ce dernier.

3. Support de frittage suivant la revendication 2, caractérise en ce que tous les éléments sont réalisés en graphite.

# Fig.1

# Fig.4

## Fig. 2

## Fig. 3